(19) Europäisches Patentamt
European Patent Office
Office européen des brevets

(11) Veröffentlichungsnummer: **0 445 674 A2**

# (12) EUROPÄISCHE PATENTANMELDUNG

(21) Anmeldenummer: **91103137.5**

(22) Anmeldetag: **02.03.91**

(51) Int. Cl.$^{5}$: **G02F 1/1337**, B29C 71/00

(30) Priorität: **07.03.90 DE 4007144**

(43) Veröffentlichungstag der Anmeldung:
**11.09.91 Patentblatt 91/37**

(84) Benannte Vertragsstaaten:
**DE FR GB**

(71) Anmelder: **HOECHST AKTIENGESELLSCHAFT**
**Postfach 80 03 20**
**W-6230 Frankfurt am Main 80(DE)**

(72) Erfinder: **Harnischfeger, Peter, Dr.**
**Robert-Schneider-Strasse 71**
**W-6100 Darmstadt(DE)**

## (54) Verfahren zur Orientierung flüssigkristalliner Polymere und ihr Einsatz als Orientierungsschicht in Flüssigkristall-Schalt-und Anzeigevorrichtungen.

(57) Es wird ein Verfahren zur Orientierung einer Schicht aus einem flüssigkristallinen, polymeren Material vorgestellt, bei dem man an dem flüssigkristallinen, polymeren Material ein Gas oder eine Flüssigkeit vorbeiströmen läßt.

Bevorzugt werden dabei Hauptkettenpolymere, die eine nematische Phase aufweisen, durch einen heißen Luftstrom, der auf das Material geleitet wird, orientiert. Elektrooptische Schalt- und Anzeigevorrichtungen, die eine derartige Orientierungsschicht enthalten, weisen einen hohen Kontrast auf. Die Orientierungsschichten sind gegenüber herkömmlichen geriebenen Orientierungsschichten vorteilhaft anwendbar, da z. B. keine elektrostatische Aufladung erfolgt.

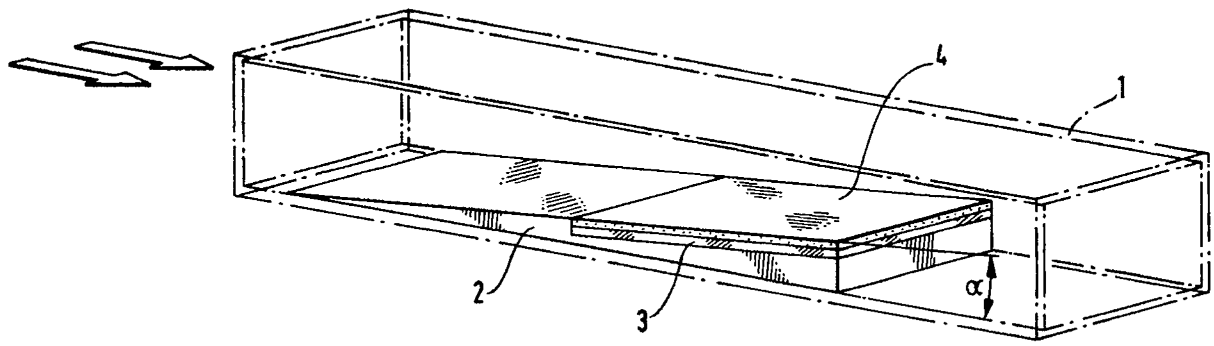


Fig. 1

EP 0 445 674 A2

Die Kombination der ungewöhnlichen anisotropen und fluiden Eigenschaften von Flüssigkristallen hat zur Verwendung von flüssigkristallinen Materialien in elektro-optischen Schalt- und Anzeigevorrichtungen (Displays) geführt. Dabei können sowohl die elektrischen, magnetischen und elastischen als auch die thermischen Eigenschaften der Flüssigkristalle zu Orientierungsänderungen ausgenutzt werden.

Optische Effekte lassen sich mit Hilfe der Doppelbrechung ("birefringence mode"), der Einlagerung von Farbstoffen ("guest-host mode") oder der Lichtstreuung erzielen. Zu diesem Zweck wurden bisher sowohl Materialien mit nematischen als auch mit smektischen Flüssigkristallphasen verwendet. Beispiele für solche Schalt- und Anzeigevorrichtungen sind bereits aus zahlreichen Patentschriften und Fachveröffentlichungen bekannt.

Flüssigkristall-Schalt- und Anzeigevorrichtungen weisen u.a. folgende Bestandteile auf: Trägerplatten (z.B. aus Glas oder Kunststoff), beschichtet mit transparenten Elektroden und einer Orientierungsschicht, Abstandshalter, Kleberahmen, Polarisatoren sowie für Farbdisplays dünne Farbfilterschichten. Weitere mögliche Komponenten sind Antireflex-, Passivierungs-, Ausgleichs- und Sperrschichten sowie elektrische nichtlineare Elemente, wie z.B. Dünnschichttransistoren (TFT) und Metall-Isolator-Metall (MIT) - Elemente. Im Detail ist der Aufbau von Flüssigkristalldisplays bereits in einschlägigen Monographien beschrieben (z.B. E. Kaneko, "Liquid Crystal TV Displays: Principles and Applications of Liquid Crystal Displays", KTK Scientific Publishers, 1987, Seiten 12-30 und 163-172).

Von den oben genannten Bestandteilen kommt der Orientierungsschicht besondere Bedeutung zu. Sie dient bekanntlich dem Zweck, eine gleichmäßige, störungsfreie Ausrichtung der Moleküllängsachsen und damit einen hohen Kontrast zu gewährleisten. Sie kann sowohl aus organischen Polymeren als auch aus anorganischen Schichten bestehen.

Die als Orientierungsschichten verwendeten organischen Polymerschichten werden üblicherweise auf die zu beschichtenden Flächen (z.B. Trägerplatten) in Form von Polymerlösungen oder Lösungen löslicher Polymervorstufen durch Druck-, Sprüh-, Tauch- oder Schleuderverfahren aufgetragen und anschließend - im allgemeinen durch Erhitzen des Naßfilms - ausgehärtet. Zur Erzielung einer orientierenden Wirkung kann die erhaltene harte Polymerschicht mit einer samtartig beschichteten oder mit Samt bezogenen Walze, einer Bürste oder ähnlichen Vorrichtungen "gerieben" werden, wodurch die Polymeroberfläche vorzugsweise richtungsorientiert aufgerauht wird.

Diese Oberflächenbehandlung hat jedoch den Nachteil, daß Abriebpartikel entstehen, die zu Kurzschlüssen im Display führen, die Planarität des Displays negativ beeinflussen und den Kontrast verringern können. Zudem kommt es bei Reibeprozessen zu elektrostatischen Aufladungen, welche eine Schädigung der auf der Trägerplatte vorhandenen Dünnschichttransistoren bewirken.

Die Orientierungsschichten können auch aus anorganischen Materialien bestehen, wie z.B. Siliziumoxid, und durch andersartige Verfahren orientiert werden, wie z.B. durch Schrägbedampfung.

Jedoch sind Bedampfungsprozesse wie z. B. für Siliziumoxid (SiO) wegen der hohen Kosten und der nur mit großem Aufwand zu erzielenden Homogenität bei großen Flächen nachteilig.

Für den Einsatz der Orientierungsschichten in Displays ist weiterhin zu beachten, daß die orientierende Wirkung bis zu einer kritischen Temperatur erhalten bleibt, welche durch die Fertigung von Zellen und Displays gegeben ist. Hierbei handelt es sich vor allem um die Härtungstemperatur von für den Zellenbau eingesetzten Klebern, welche bevorzugt bei ca. 150 °C liegt.

Der vorliegenden Erfindung liegt die Aufgabe zugrunde, ein Verfahren zur Ausrichtung von Orientierungsschichten für Flüssigkristall-Schalt- und -Anzeigvorrichtungen bereitzustellen, welches die oben beschriebenen Nachteile der bisher zum Einsatz kommenden Orientierungstechniken vermeidet. Die Orientierungsschichten müssen neben einer guten Haftfestigkeit auf der Trägerunterlage und einer hohen Transparenz eine besonders gleichmäßige Orientierung sowohl nematischer als auch smektischer Flüssigkristalle ermöglichen und in elektrooptischen Schalt- und Anzeigevorrichtungen zu einem hohen Kontrast führen. Darüberhinaus besteht die Aufgabe, neue Materialien für Orientierungsschichten mit den genannten positiven Eigenschaften zu entwickeln.

Eine Lösung dieser Aufgabe ergibt sich durch ein Verfahren zur Orientierung auf der Basis von flüssigkristallinen Polymeren (LCP).

In JP-A 196,250/89 wird eine Orientierungsschicht vorgestellt, welche aus einem LCP-Film besteht, der durch Fließen des LCPs in der Flüssigkristall-Phase und anschließendem Abkühlen gebildet wird.

Im Gegensatz hierzu, wird in der vorliegenden Erfindung ein bereits existierender LCP-Film durch die Wechselwirkung mit einer Gas- oder Flüssigkeitsströmung als Orientierungsschicht ausgebildet (ohne Kontakt des LCP mit mechanischen Bauteilen).

Die flüssigkristallinen Orientierungsschichten bestehen vorzugsweise aus flüssigkristallinen Hauptkettenpolymeren, flüssigkristallinen Seitenkettenpolymeren, Kombination dieser beiden, flüssigkristallinen Netzwerken, "Guest-Host"-Systemen oder auch aus Mischungen der Genannten untereinander und/oder mit

niedermolekularen Flüssigkristallen. Es können sowohl thermotrope und lyotrope als auch amphotrope (d. h. thermotrop + lyotrop) flüssigkristalline Materialien Verwendung finden.

Beispiele für geeignete Materialien werden in EP-A 348 873, EP-A 322 703, EP-A 310 081, EP-A 300 752 und EP-A 297 554 beschrieben.

Bevorzugt wird die Verwendung von LCPs mit einer Glastemperatur > 150 ° C, wozu sich insbesondere flüssigkristalline, thermotrope Hauptkettenpolymere anbieten. Diese sind vorzugsweise zum einen löslich in N-Methylpyrrolidon oder ähnlichen Lösungsmitteln, und zum anderen aber in den als schaltbares Medium zum Einsatz kommenden niedermolekularen oder polymeren flüssigkristallinen Verbindungen schwer löslich. Insbesonder geeignet sind Hauptkettenpolymere auf Polyesterbasis, insbesondere Polyester aus aromatischen Diolen und aromatischen Diestern, welche gegebenenfalls eine Hydroxycarbonsäure als weitere Komponente enthalten. Besonders bevorzugt wird ein thermotropes Polymer auf der Basis von p-Hydroxybenzoesäure, Isophthalsäure und Hydrochinon. Bevorzugt kommen solche flüssigkristallinen Polymeren als Material für Orientierungsschichten zum Einsatz, die eine nematische Phase besitzen. Ein Einsatz von Polymeren mit z. B. smektischen Phasen ist ebenfalls möglich.

Das als Orientierungsschicht eingesetzte flüssigkristalline Polymer wird durch ein Verfahren orientiert, welches die Erzeugung elektrostatischer Aufladungen vollständig bzw. weitgehend vermeidet, und welches die Kontamination der Orientierungsschicht durch Abrieb- und Staubpartikel vermeidet. Die genannten polymeren flüssigkristallinen Verbindungen auf Polyester-Basis lassen sich darüberhinaus auch mit den bekannten Verfahren (wie z.B. durch Reibeprozesse, durch Bürsten oder durch Applikation von elektrischen bzw. magnetischen Feldern) orientieren. Die auf diese Weise hergestellten Orientierungsschichten auf Polyester-Basis lassen sich aufgrund ihrer günstigen Eigenschaften (hohe Homogenität, stark orientierende Wirkung, etc.) vorteilhaft als Komponenten in LC-Displays, insbesondere für FLC-Display einselzen.

Insbesondere lassen sie sich jedoch durch das nachfolgend beschriebene Verfahren orientieren.

Das erfindungsgemäße Verfahren beruht auf dem Einsatz einer Gas- oder Flüssigkeitsströmung, die über die aus flüssigkristallinem Polymer bestehende Schicht geleitet wird.

Die Temperatur der Gasströmung liegt dabei bevorzugt im Bereich von 100-400 ° C, insbesondere bei 150-350 ° C. Die Temperatur ist besonders bevorzugt höher als die Glastemperatur des zu orientierenden Materials. Das Gas wird in einer bevorzugten Ausführungsform zur Vermeidung von Staubpartikeln über einen Filter zuvor gereinigt.

Beim Einsatz von Flüssigkeitsströmung zur Orientierung der LCPs kann eine Vielzahl von Flüssigkeiten Verwendung finden, bevorzugt werden solche, in denen das Material der Orientierungsschicht weder gut löslich noch vollständig unlöslich ist. Als Beispiele für auch bei Raumtemperatur einsetzbare Flüssigkeiten seien die organischen Lösungsmittel $\gamma$-Butyrolacton, N-Methylpyrrolidon, Methylethylketon, Cyclohexanon und Diglyme genannt. Bei Temperaturen oberhalb der Glastemperatur des Polymers werden bevorzugt als Wärmeüberträger Wasser, Glycerin oder entsprechende polare Flüssigkeiten eingesetzt.

Zur Orientierung der Polymerschicht mittels eines Gasstromes ist das Gas für einen Zeitraum von vorzugsweise mindestens 2 Minuten über die polymere Schicht zu leiten. Eine Prozeßdauer von 5 bis 60, inbesondere von 10 bis 40 Minuten führt im allgemeinen zu besonders guter Orientierung des flüssigkristallinen, polymeren Materials. Ein zu langer Orientierungsprozeß durch Gasströmung ist schon aus wirtschaftlichen Gründen wenig vorteilhaft.

In einer bevorzugten Ausführungsform erfolgt die Orientierung durch einen Gasstrom, bei dem das Gas eine Temperatur aufweist, die im Bereich der flüssigkristallinen Phase, insbesondere der nematischen Phase des polymeren Materials liegt.

In einer weiteren Ausführungsform wird ein Luftstrom unter einem Anstellwinkel ($\alpha$) von 0,5 bis 10 °, insbesondere von 1 bis 5 ° auf das polymere Material geleitet, wodurch eine besonders hohe Ausrichtung erreicht werden kann.

Nach einer Behandlung des flüssigkristallinen, polymeren Materials mit einer Gas- oder Flüssigkeitsströmung wird die durch diesen Prozeß hervorgerufene Struktur- und Eigenschaftsveränderung durch das Entfernen dar Flüssigkeit und/oder durch Absenken der Temperatur unterhalb der Glastemperatur des Polymeren eingefroren.

Die beschriebenen polymeren Orientierungsschichten lassen sich vorteilhaft in Flüssigkristall-Schalt- und -Anzeigeelementen einsetzen, u. a. weil sie die eingangs beschriebenen Nachteile von geriebenen Orientierungsschichten nicht aufweisen.

Die Erfindung wird durch die nachfolgenden Beispiele verdeutlicht.

**BEISPIELE**

**Beispiel 1**

Als flüssigkristallines Polymer wurde ein thermotropes Hauptkettenpolymer auf der Basis von p-Hydroxybenzoesäure, Isophthalsäure und Hydrochinon verwendet, welches eine Glastemperatur von 155 °C und eine nematische Phase im Bereich von 312 - 336 °C besitzt, (Modifikation des handelsüblichen Polymers ®Vectra, eingetragenes Warenzeichen der Hoechst Celanese Corporation, siehe auch "Vectra - Polymere Werkstoffe, Hoechst High Chem"-Magazin, September 1989, Frankfurt am Main). Eine Lösung dieses Polymers in N-Methylpyrrolidon (3 Gew.-%) wurde durch ein Spin-Coating-Verfahren auf die Oberfläche eines (zuvor gereinigten) Glassubstrates aufgetragen. Bei einer Temperatur von 200 °C wurde der Film eine Stunde lang gehärtet, so daß das Lösungsmittel vollständig verdampft war. Das so behandelte Substrat weist einen trockenen, harten Polymerfilm von 50 µm Schichtdicke auf. (Die Schichtdicke kann durch die Rotationsgeschwindigkeit beim Spin-Coating-Prozeß eingestellt werden.)

Auf diese Weise hergestellte Substrate wurden dann auf einem Halter montiert, der sich in bzw. vor einer langen Düse unterschiedlicher Form und variablen Querschnitts befand. In Figur 1 ist diese Anordnung schematisch dargestellt (Dimension: 200 : 25 : 10 mm). Der dargestellte Quader (1) deutet eine Düse mit rechteckigem Querschnitt an, in die die Probenhalterung (2) eingebracht ist. Auf der Probenhalterung (2) befindet sich das Glassubstrat (3), welches von einer Schicht des flüssigkristallinen Polymermaterials (4) bedeckt ist. Auf der linken Seite der Düse ist durch zwei Pfeile die Strömungsrichtung des Gasstromes angedeutet. Die Probenhalterung (2) fixiert das Glassubstrat (3) in dem Anstellwinkel ($\alpha$) in bezug auf die Strömungsrichtung des Gases.

Die Düse (1) wurde mit einem Wärmestromaggregat gekoppelt, dessen Gasdurchsatzmengen und Gastemperatur gesteuert werden konnten. Bei den vorliegenden Messungen betrug der Gasdurchsatz jeweils 400 l/min. Die flüssigkristalline, polymere Schicht wurde bei unterschiedlichen Temperaturen und unter unterschiedlichen Neigungswinkeln zum Luftstrom bei variierenden Prozeßdauern mit einem unidirektionalen Gasstrom behandelt.

Nach dem Orientierungsprozeß wurden die Substrate (Glassubstrat + Orientierungsschicht) unter Verwendung von Abstandshaltern im Abstand von 4 µm planparallel mit antiparalleler Orientierung verklebt. Die so hergestellten Meßzellen wurden mit einer flüssigkristallinen Breitbereichsmischung mit nematischer Phase gefüllt (z. B. mit "ZLI 1565" der Firma E. Merck, Darmstadt).

Der Kontrast der Testzelle wurde wie folgt gemessen: Unter einem Polarisationsmikroskop wurde die Meßzelle unter gekreuzten Polarisatoren justiert und der maximale wie auch der minimale Lichtdurchsatz mittels einer Photodiode bestimmt. Damit dem Einfluß der spektralen Empfindlichkeit der Diode auf die Ausgangsspannung (U) begrenzt wird, wird zur Messung ein Grünfilter eingesetzt. Die Meßzellen werden durch das Kontrastverhältnis (CR) charakterisiert, welches über folgende Gleichung definiert wird:

$$CR = \frac{U_{hell} - U_{dunkel}}{U_{dunkel}}$$

Die auf diese Weise ermittelten Werte wurden mit Werten verglichen, die man mit kommerziell erhältlichen Meßzellen gleicher Dicke, die jedoch mit geriebenem Polyimid als Orientierungsschicht arbeiten, erhält (Meßzellen der Firma EHC, Tokyo). Zum besseren Vergleich wird das Kontrastverhältnis der EHC-Zellen als 100 definiert.

**Beispiel 2**

Es wurde die Abhängigkeit der Orientierung der flüssigkristallinen, polymeren Schicht von dem Querschnitt und der Form der Düse und von Anstellwinkel des Luftstroms untersucht. Die Ergebnisse sind in Tabelle 1 zusammengestellt, wobei unter Z verschiedene Düsenformen aufgeführt sind und $\alpha$ den Probenanstellwinkel beschreibt. Bei der Düsenform (1) befand sich der Probenhalter außerhalb der Düse. Es zeigt sich, daß ein einfaches Anblasen der flüssigkristallinen Polymerschicht nur zu einer geringen Orientierung führt. Bei den Düsenformen (2) und (3) wurde das Substrat, wie in Fig. 1 angedeutet, innerhalb der Düse justiert. Es zeigt sich, daß auf diese Weise eine deutlich höhere Orientierung erreicht werden kann. Die in Tabelle 1 genannten Zahlenwerte beziehen sich auf das maximale Kontrastverhältnis (CR). Bei den Experimenten betrug die Temperatur des Gasstroms 200 - 360 °C, bei den speziell genannten Proben (Tab. 1) wies das Gas eine Temperatur von 320 - 330 °C auf, als Gas wurde Luft verwendet. Wie aus Tabelle 1 klar hervorgeht, führt die Verwendung einer Düse mit rechteckigem Querschnitt (3) zu einer deutlich besseren Orientierung, was vermutlich auf eine günstigere (laminare) Luftströmung zurückzuführen ist. Ein Vergleich der Messungen bei verschiedenen Probenanstellwinkel ($\alpha$) zeigt, daß ein Anstellwinkel von

3° zu deutlich verbesserten Resultaten führt.

**Beispiel 3**

Es wurde die Abhängigkeit der Orientierung der flüssigkristallinen, polymeren Schicht von der Temperatur des Gasstromes und von der Prozeßdauer untersucht. Es wurden Substrate wie in Beispiel 1 beschrieben hergestellt und in einer Düse mit rechteckigem Querschnitt mit den Dimensionen 200 : 25 : 10 mm mit einem Anstellwinkel (α) von 3° montiert.

Wie aus Figur 2 ersichtlich wird, ist die orientierende Wirkung des Luftstroms auf die flüssigkristalline, polymere Schicht dann am größten, wenn der Luftstrom eine Temperatur besitzt, die im Bereich der nematischen Phase des thermotropen Polymers liegt. In Figur 2 ist das Kontrastverhältnis (CR) der Testzelle gegen die Temperatur (in °C) aufgetragen. Die Prozeßdauer betrug 20 min. (d. h. die Polymerschicht wurde 20 Minuten lang dem genannten Luftstrom in der Düse ausgesetzt). Im vorliegenden Beispiel wurde bei einer Temperatur von 326°C ein optimales Kontrastverhältnis erreicht. Die bei dieser Temperatur orientierten Testzellen wiesen einen Kontrast von bis zu 80 % verglichen mit dem Kontrast der kommerziell erhältlichen EHC-Zellen auf.

In Figur 3 wird der Einfluß der Prozeßdauer ($t_{Pr}$) auf das Kontrastverhältnis (CR) dargestellt. Die Messungen erfolgten bei einer Temperatur des Gasstromes von 326°C. Es zeigte sich, daß die orientierende Wirkung des Luftstromes auf das flüssigkristalline, polymere Material erst nach einer Behandlungsdauer von einigen Minuten beobachtet werden kann. Nach einem Behandlungszeitraum von 15 bis 25 Minuten wird eine optimale Orientierung erzielt.

**Beispiel 4**

Die nach Beispiel 1 auf ein Glassubstrat aufgebrachte Polyesterschicht kann ebenfalls durch einen Reibeprozeß (z.B. mit Samt) orientiert, und die so entstandene Orientierungsschicht als Komponente in einer Meßzelle bzw. einem LC-Display vorteilhaft eingesetzt werden.

**Tab. 1**

| ζ | | α | |
|---|---|---|---|
| | | 0° | 3° |
| (1) | 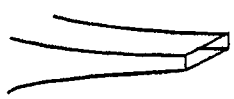 | 4 - 8 | 8 - 12 |
| (2) | 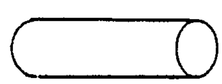 | 15 - 20 | 25 - 30 |
| (3) | 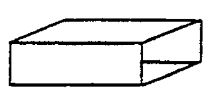 | 25 - 30 | 70 - 80 |

**Patentansprüche**

**1.** Verfahren zur Orientierung einer Schicht aus einem flüssigkristallinen, polymeren Material, dadurch

gekennzeichnet, daß man an dem flüssigkristallinen, polymeren Material ein Gas oder eine Flüssigkeit vorbeiströmen läßt.

2. Verfahren nach Anspruch 1, dadurch gekennzeichnet, daß man an dem flüssigkristallinen, polymeren Material ein auf eine Temperatur von 100 - 400° C erhitztes Gas vorbeiströmen läßt.

3. Verfahren nach Anspruch 1, dadurch gekennzeichnet, daß man an dem flüssigkristallinen, polymeren Material eine Flüssigkeit vorbeiströmen läßt.

4. Verfahren nach Anspruch 1, dadurch gekennzeichnet, daß man als flüssigkristallines, polymeres Material ein thermotropes Hauptkettenpolymer verwendet.

5. Verfahren nach Anspruch 1, dadurch gekennzeichnet, daß man als flüssigkristallines, polymeres Material ein thermotropes Hauptkettenpolymer auf der Basis von p-Hydroxybenzoesäure, Isophthalsäure und Hydrochinon verwendet, welches eine nematische Flüssigkristallphase besitzt.

6. Verfahren nach Anspruch 1, dadurch gekennzeichnet, daß man an dem flüssigkristallinen, polymeren Material einen 150 - 350° C heißen Luftstrom vorbeiströmen läßt.

7. Verfahren nach Anspruch 1, dadurch gekennzeichnet, daß die Orientierung durch ein vorbeiströmendes Gas erfolgt und der Gasstrom mindestens 2 Minuten lang über die polymere Schicht geleitet wird.

8. Verfahren nach Anspruch 5, dadurch gekennzeichnet, daß die Orientierung durch einen Gasstrom erfolgt und dieses Gas eine Temperatur aufweist, die im Bereich der flüssigkristallinen Phase des polymeren Materials liegt.

9. Verfahren nach Anspruch 5, dadurch gekennzeichnet, daß die Orientierung durch einen Gasstrom erfolgt und dieses Gas eine Temperatur aufweist, die im Bereich der nematischen Phase des flüssigkristallinen, polymeren Materials liegt.

10. Verfahren nach Anspruch 6, dadurch gekennzeichnet, daß der Luftstrom unter einem Anstellwinkel ($\alpha$) von 0,5 bis 10° auf das polymere Material geleitet wird.

11. Verfahren nach Anspruch 6, dadurch gekennzeichnet, daß der Luftstrom unter einem Anstellwinkel ($\alpha$) von 1 bis 5° auf das polymere Material geleitet wird.

12. Orientierungsschicht bestehend aus einem flüssigkristallinen, polymeren Material, dadurch gekennzeichnet, daß sie aus einem thermotropen Hauptkettenpolymer auf Polyesterbasis besteht.

13. Orientierungsschicht gemäß Anspruch 12, dadurch gekennzeichnet, daß sie aus einem Polyester auf der Basis von p-Hydroxybenzoesäure, Isophthalsäure und Hydrochinon besteht.

14. Verwendung von durch laminare Strömung gemäß Anspruch 1 orientierten polymeren Schichten als Orientierungsschicht in Flüssigkristall-Schalt- und Anzeigeelementen.

15. Elektrooptische Schalt- und Anzeigevorrichtung enthaltend ein flüssigkristallines Medium, zwei Elektroden, zwei Trägerplatten sowie mindestens eine Orientierungsschicht, dadurch gekennzeichnet, daß als Orientierungsschicht ein flüssigkristallines, polymeres Material verwendet wird, welches durch eine Gas- oder Flüssigkeitsströmung orientiert wurde.

16. Elektrooptische Schalt- und Anzeigevorrichtung enthaltend ein flüssigkristallines Medium, zwei Elektroden, zwei Trägerplatten sowie mindestens eine Orientierungsschicht, dadurch gekennzeichnet, daß eine Orientierungsschicht gemäß Anspruch 12 eingesetzt wird.

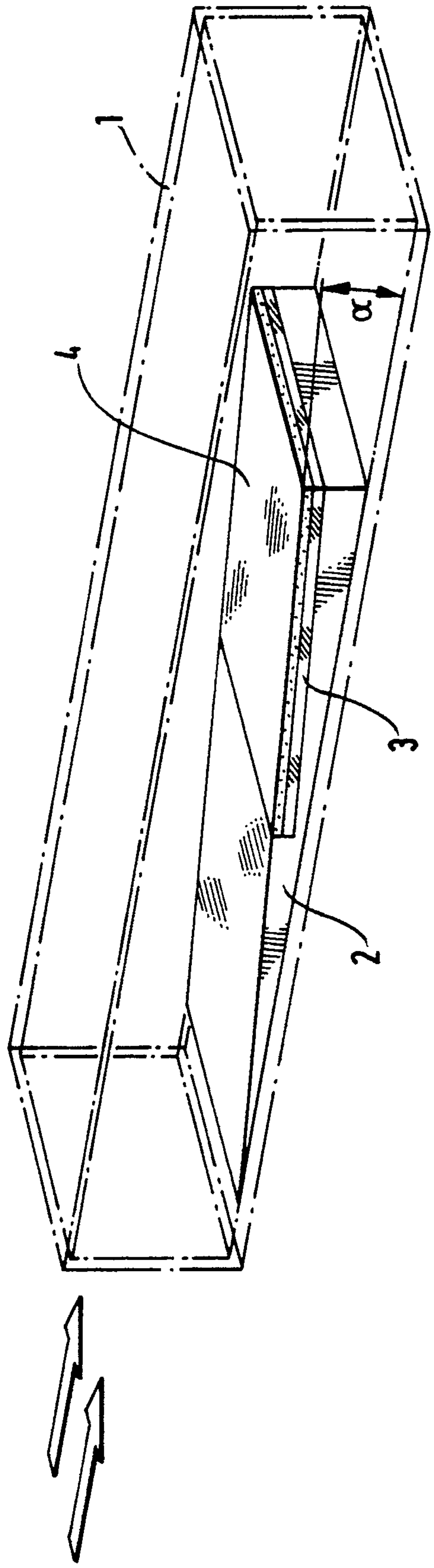


Fig. 1

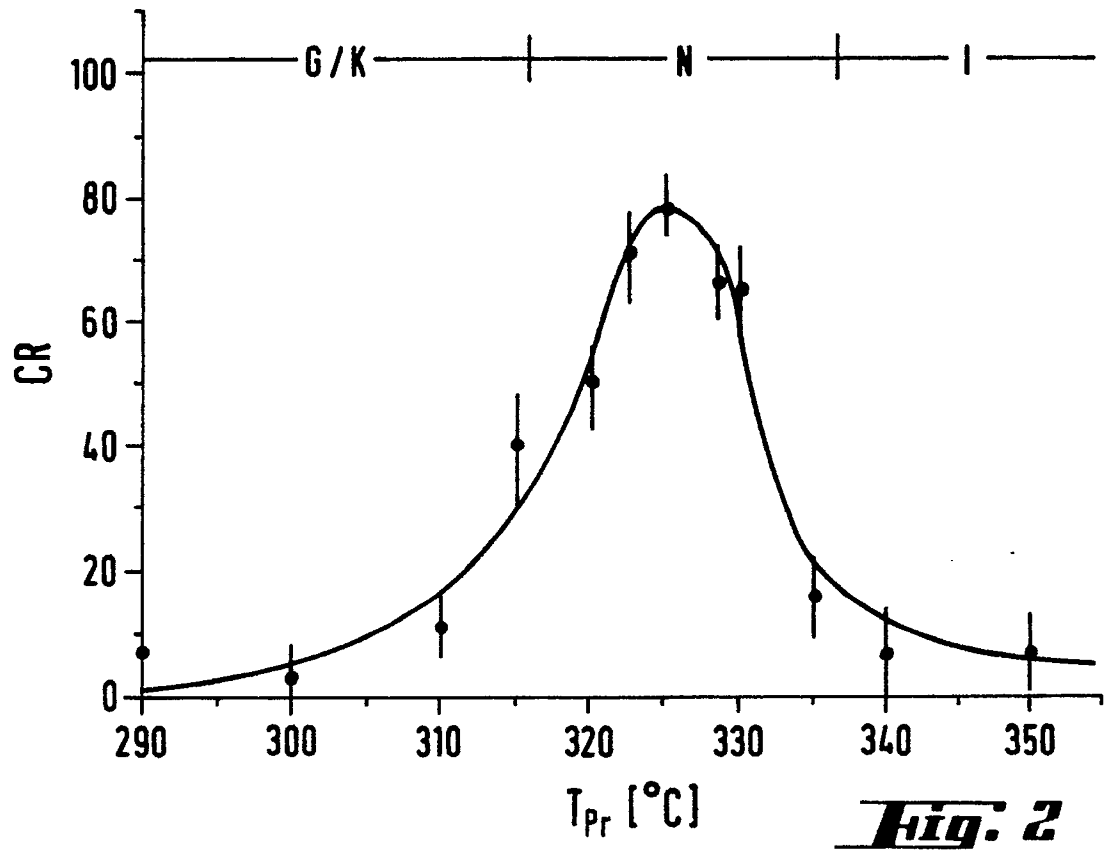
G / K
N
I
100
80
60
40
20
0
CR
290
300
310
320
330
340
350
$T_{Pr}$ [°C]

Fig. 2

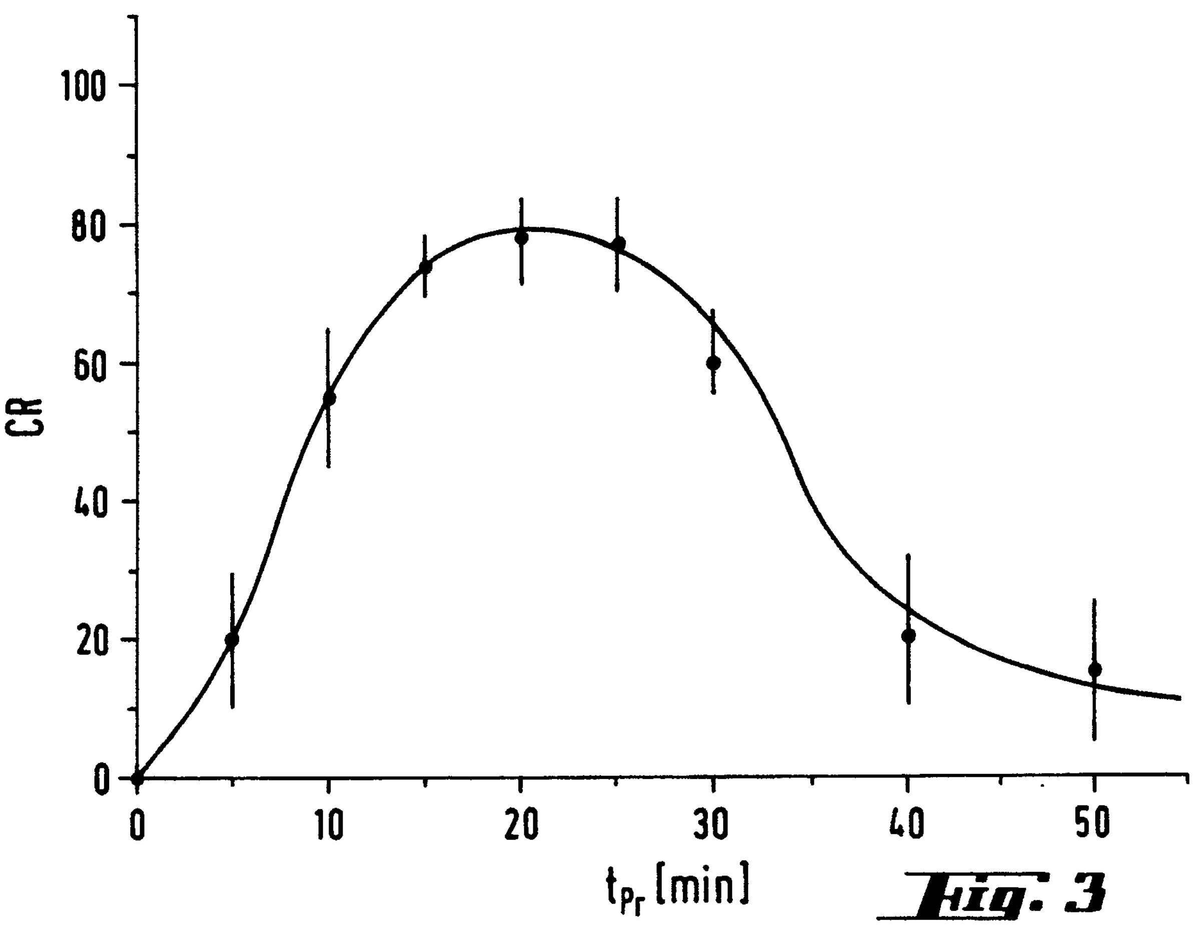
100
80
60
40
20
0
CR
0
10
20
30
40
50
$t_{Pr}$ [min]

Fig. 3